# EUROPÄISCHE PATENTSCHRIFT

(11) **EP 0 507 198 B1**
(45) Veröffentlichungstag und Bekanntmachung des Hinweises auf die Patenterteilung: **07.06.1995**
(21) Anmeldenummer: 92105081.1
(22) Anmeldetag: 25.03.1992
(51) Int. Cl.: B41F 13/02

(54) **Rollenkette für eine Papierbahneinzugsvorrichtung einer Rollenrotationsdruckmaschine**
Roller chain for the web threading device of a rotary web printing press
Chaîne à rouleaux pour le dispositif d'enfilement de bandes de papier d'une rotative à rouleaux

(30) Priorität: 03.04.1991 DE 4110668
(43) Veröffentlichungstag der Anmeldung: 07.10.1992
(73) Patentinhaber: KOENIG & BAUER-ALBERT AKTIENGESELLSCHAFT, 97080 Würzburg (DE)
(72) Erfinder: Eckert, Günther Oskar, W-8705 Zellingen (DE)

(56) Entgegenhaltungen:
- CH-A- 0 329 967
- DE-A- 3 725 634
- US-A- 2 455 624
- US-A- 2 646 160
- US-A- 4 177 635

## Beschreibung

Die Erfindung betrifft eine Rollenkette für eine Papierbahneinzugsvorrichtung einer Rollenrotationsdruckmaschine gemäß dem Oberbegriff des Patentanspruchs 1.

Allgemein bekannt ist es, in Rollenrotationsdruckmaschinen Papierbahneinzugsvorrichtungen vorzusehen, die immer dann zum Einsatz kommen, wenn Papierbahnen vor Produktionsbeginn in Druckmaschinen eingezogen werden sollen oder wenn während des Druckvorganges ein Bruch der Papierbahn auftritt.

In diesen Einzugsvorrichtungen laufen Rollenketten, die in Kunststoffbahnen geführt und von Motoren angetrieben werden. Die Motoren sind in solchen Abständen angeordnet, die kleiner sind als die jeweilige Kettenlänge. Die Rollenketten tragen ein Befestigungsstück, an welchem jeweils eine Papierbahn befestigt werden kann. Diese Rollenketten sind dazu geeignet, beispielsweise auf der Innenseite eines Gestells einer Rotationsdruckmaschine in einer Ebene, also flächenhaft, beliebige Bahnen zu fahren. Dabei werden die Rollenketten nicht nur auf Zug, sondern auch auf Druck beansprucht, da der Papierzug von der Spitze der Rollenkette bis zum Antriebsritzel als Druckkraft zur Wirkung kommt.

Zum Einziehen von Papierbahnen über die Wendestangen hinweg zu den Trichtern, muß die Einzugsvorrichtung jedoch die Ebene der Gestellinnenseite verlassen können.

Durch die gattungsgemäße DE-PS 30 48 797 ist eine verwindbare Rollenkette, insbesondere zum Einziehen von Materialbahnen in Rollenrotationsdruckmaschinen bekanntgeworden, bei welcher bekannte Laschenpaare abwechselnd mit drahtförmigen federelastischen Stäbchenpaaren kombiniert werden.

Nachteilig bei dieser verwindbaren Rollenkette ist jedoch, daß sich bei räumlicher Kurvenführung und Schrägstellung der Stäbchenpaare der Abstand der Rollen zueinander verändert und es resultiert eine Klemmkraft über die Rollen auf die Rollenlaufbahn, da die Kraftrichtung der Rollen nicht identisch ist mit der Richtung der Kraftübertragungsmittel.

Gemäß DE-OS 37 25 634 ist ebenfalls eine verwindbare Rollenkette für Papierbahneinzugsvorrichtungen bei Druckmaschinen bekanntgeworden, wobei die bekannten steifen Laschenpaare durch flexible Seile ersetzt sind, die wiederum mit Distanzelementen umgeben sind. Nachteilig bei dieser Rollenkette ist, daß analog der vorgenannten DE-PS 30 48 797 die gleiche Wirkung eintritt, nämlich daß sich die Distanzelemente bei räumlicher Kurvenführung verdrehen, nicht mehr parallellaufen zur Vortriebskraft. Es wirkt ein Drehmoment, welches Anlaß zum Verklemmen der Rollen in der Rollenlaufbahn gibt.

In der CH-PS 3 29 967 wird eine in einer Führung bewegbare Rollenkette mit Kettengliedern beschrieben, welche aus auf Bolzen gelagerten Rollen besteht, die von in Kettenlängsachse parallelgeführten Laschenpaaren gehalten sind. Die Laschenpaare sind gabelförmig ausgebildet und an ihrer Bassisseite der Gabel in Richtung Kettenlängsachse durch ein Doppelschwenkgelenk miteinander verbunden, wobei die Laschen an den Enden der Gabeln quer zur Kettenlängsachse gelenkig miteinander verbunden sind. Diese Rollenkette ist nicht für eine Papiereinzugsvorrichtung einer Rollenrotationsdruckmaschine vorgesehen. Die Enden der Gabeln weisen senkrecht zur Kettenlängsache Lochungen zur Aufnahme der Bolzen auf, wobei die Bolzen beidseitig Verlängerungen besitzen, die mit den Zahnflanken eines Antriebsrades in Eingriff stehen.

Der Erfindung liegt daher die Aufgabe zugrunde, eine Rollenkette für eine Papierbahneinzugsvorrichtung einer Rollenrotationsdruckmaschine mit Kettengliedern, bestehend aus auf Bolzen gelagerten Rollen, die von in Kettenlängsachse parallel geführten Laschenpaaren gehalten sind, zu schaffen, die räumlich bewegbar ist, sowie bei einfacher technischer Ausführbarkeit Zug- und insbesondere Druckkräfte unter Vermeidung von Klemmwirkung zuverlässig aufnehmen kann.

Erfindungsgemäß wird die Aufgabe durch den kennzeichnenden Teil des Hauptanspruches gelöst. Weitere zweckmäßige Anordnungen sind den Unteransprüchen zu entnehmen.

Durch die erfindungsgemäße Ausbildung der Kettenglieder ist es möglich geworden, eine verwindbare Rollenkette für eine Papierbahneinzugsvorrichtung einer Rollenrotationsdruckmaschine zur Verfügung zu stellen, bei welcher neben Zugkräften insbesondere die Druckkräfte dadurch beherrscht werden, daß die drehgelenkig miteinander verbundenen Laschen die auftretenden Druckkräfte unmittelbar über die Rollen auf die Kettenführung übertragen, und Seitenkräfte und mit den damit verbundenen Klemmwirkungen vermieden werden. Die Kettenglieder der erfindungsgemäßen Rollenkette sind preisgünstig und technisch einfach herstellbar, da nur Stanzteile und Bolzen Verwendung finden.

Die Erfindung soll nachstehend an einem Ausführungsbeispiel näher erläutert werden.

In der zugehörigen Zeichnung zeigen
- Fig. 1a:: die Seitenansicht einer Rollenkette mit der Darstellung eines um 90^{°} gedrehten Teils eines Kettengliedes;
- Fig. 1b:: die Draufsicht nach Fig. 1a;
- Fig. 1c:: eine vergrößerte Darstellung eines gabelförmigen Laschenteiles;
- Fig. 2a:: die Vorderansicht einer Drehführung, d. h. eines räumlichen Kurvenstücks;
- Fig. 2b:: die Ansicht B nach Fig. 2a;
- Fig. 2c:: die Ansicht X nach Fig. 2a mit einem Ausschnitt zur Darstellung der Lage einer Rolle in Draufsicht;
- Fig. 3a:: die Seitenansicht einer Antriebsführung der Rollenkette;
- Fig. 3b:: der Schnitt B-B nach Fig. 3a;
- Fig. 4a:: die Vorderansicht einer Rollenführung mit Papierbahnbefestigung;
- Fig. 4b:: die Seitenansicht nach Fig. 4a;
- Fig. 4c:: die Draufsicht nach Fig. 4a.

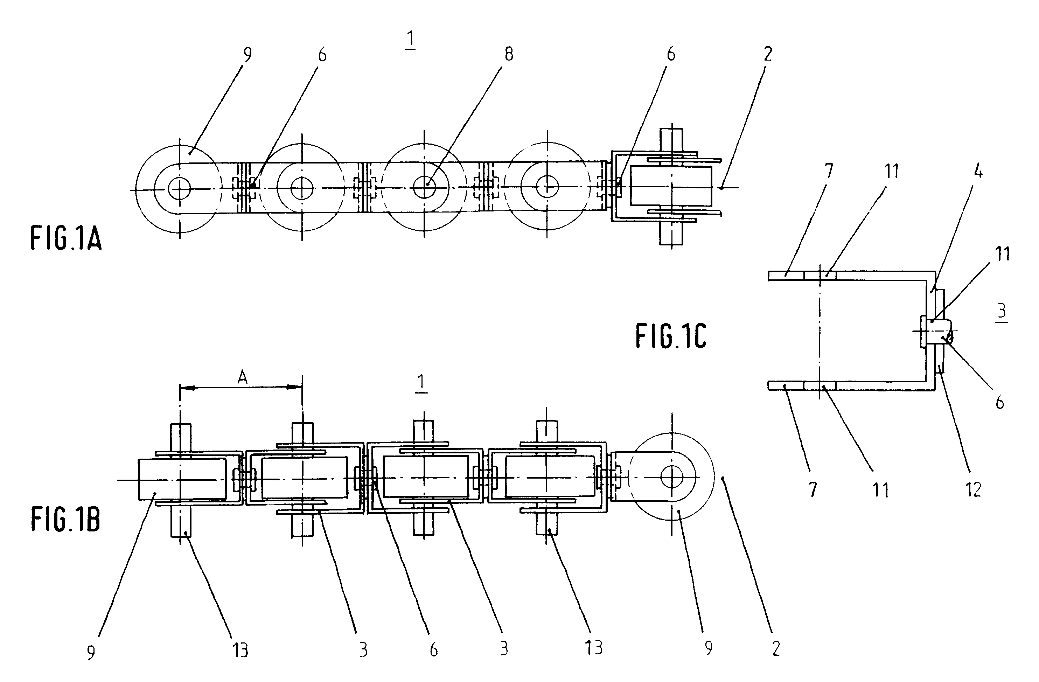

Gemäß Fig. 1 wird die erfindungsgemäße Rollenkette 1 in verschiedenen Ansichten gezeigt. Die Kettenglieder A bestehen aus gabelartigen, in Kettenlängsachse 2 parallelgeführte Laschen 3, die an der Basisseite 4 der Lasche 3 in Richtung Kettenlängsachse 2 durch ein Gelenk 6 miteinander verbunden sind. Die Laschen 3 sind an den Enden der Gabel 7 quer zur Kettenlängsachse 2 mittels Bolzen 8, die durch Lochungen 11 geführt werden, verbunden, auf denen Rollen 9 drehbar gelagert sind.

Gleichzeitig verbinden die Bolzen 8 die Enden der Gabeln 7 miteinander, die mit der offenen Seite der Gabel 7 zueinander weisen. Die Bolzen 8 sind durch weitere Lochungen 11 in den Gabeln 7 geführt. Das Gelenk 6 kann als Niet, als gestauchter Bolzen oder dgl. ausgeführt sein. Zur Verminderung der Reibung zwischen zwei mittels Gelenk 6 verbundener Basisseiten 4 der Laschen 3 ist eine Anlaufscheibe 12 vorgesehen. Wie in Fig. 1a und 1b dargestellt, können die Teile eines Kettengliedes 90^{°}, oder auch in jedem anderen beliebigen Winkel zueinander verdreht werden, was für eine räumliche Kettenführung unabdingbar ist.

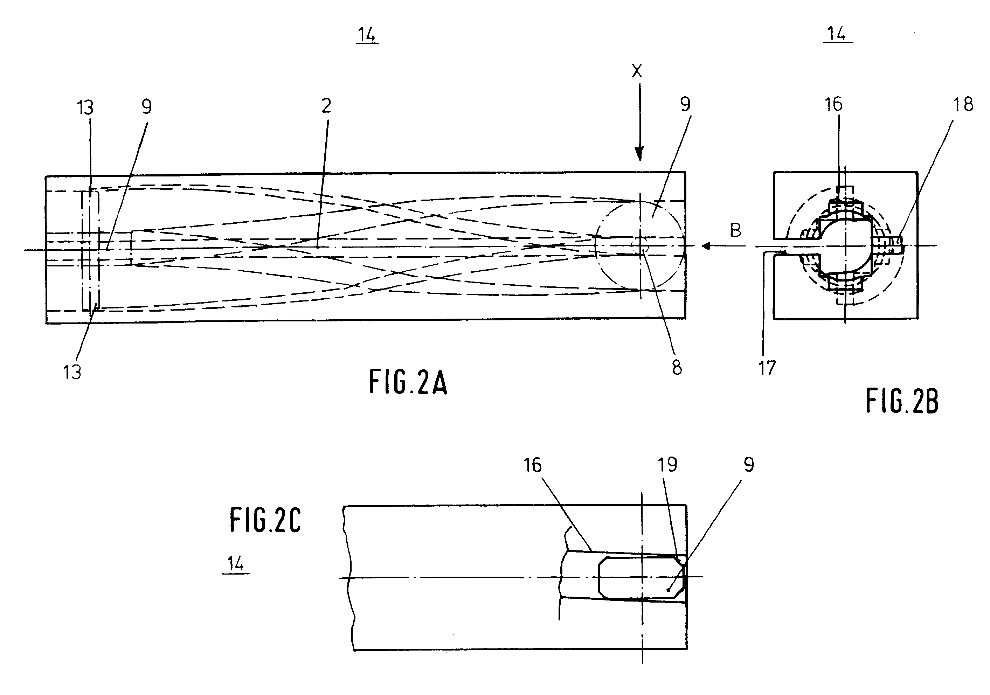

Gemäß Fig. 2a ist das Kurvenstück einer Kettenführung 14 dargestellt, wobei die Kettenglieder A einer Rollenkette 1 räumlich bewegt, d. h. verwunden werden. In Fig. 2b ist ersichtlich, daß die Kettenführung 14 einen im wesentlichen C-förmigen Querschnitt besitzt. Die Rollen 9 laufen auf einer Laufbahn 16. Die Verlängerungen 13 der die Rollen 9 tragenden Bolzen 8 sind einerseits in der Öffnung 17 der Kettenführung 14 und andererseits in einer der Öffnung 17 gegenüberliegenden, in der hinteren Wand der Kettenführung 14 befindlichen nutförmigen Ausnehmung 18 geführt.

Gemäß Fig. 2c ist die ausschnittweise Ansicht X nach Fig. 2a dargestellt, wobei eine Rolle 9 auf der Laufbahn 16 gezeigt ist. Die Rolle 9 besitzt an den Außenkanten ihrer Lauffläche Radien oder Phasen 19, die beim räumlichen Bewegen der Rollenkette 1 Reibungsverluste verringern.

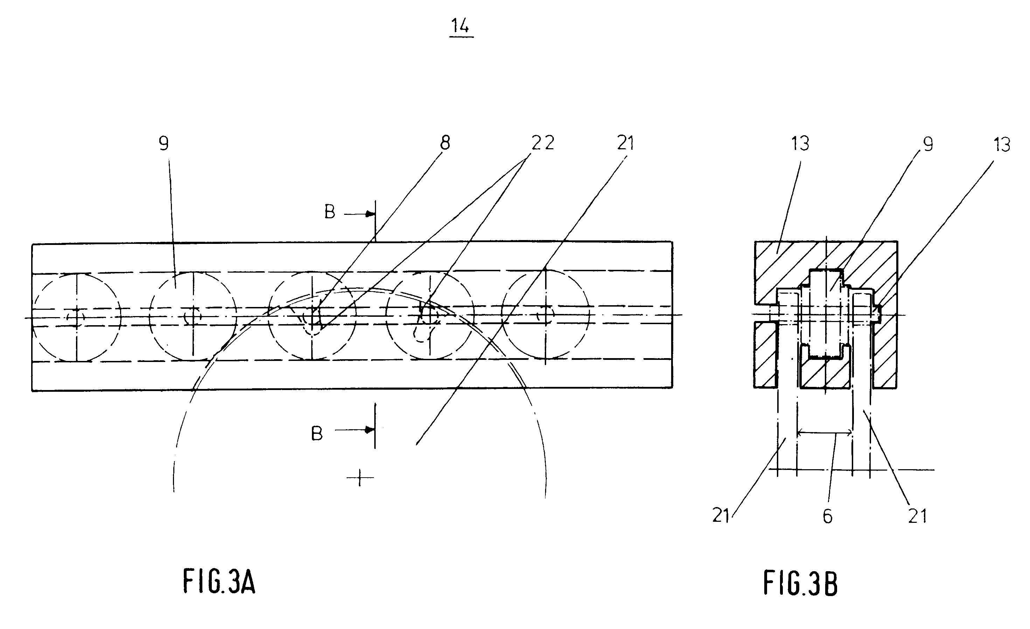

Gemäß Fig. 3a ist eine Gerade einer Kettenführung 14 dargestellt. Die Rollenkette 1 wird durch ein Antriebsrad 21 bewegt, welches aus zwei im Abstand b voneinander angeordneten Zahnrädern bestehen kann, deren Zahnflanken 22 mit den Verlängerungen 13 der Bolzen 8 in Eingriff stehen. Diese Antriebsräder 21, welche mit nicht dargestellten Antrieben in Verbindung stehen, sind in bestimmten Abständen in den Rotationsdruckmaschinen angeordnet. Die jeweiligen Längen der Rollenketten 1 sind größer als die Anordnungen der Antriebsräder 21 in den Rotationsdruckmaschinen.

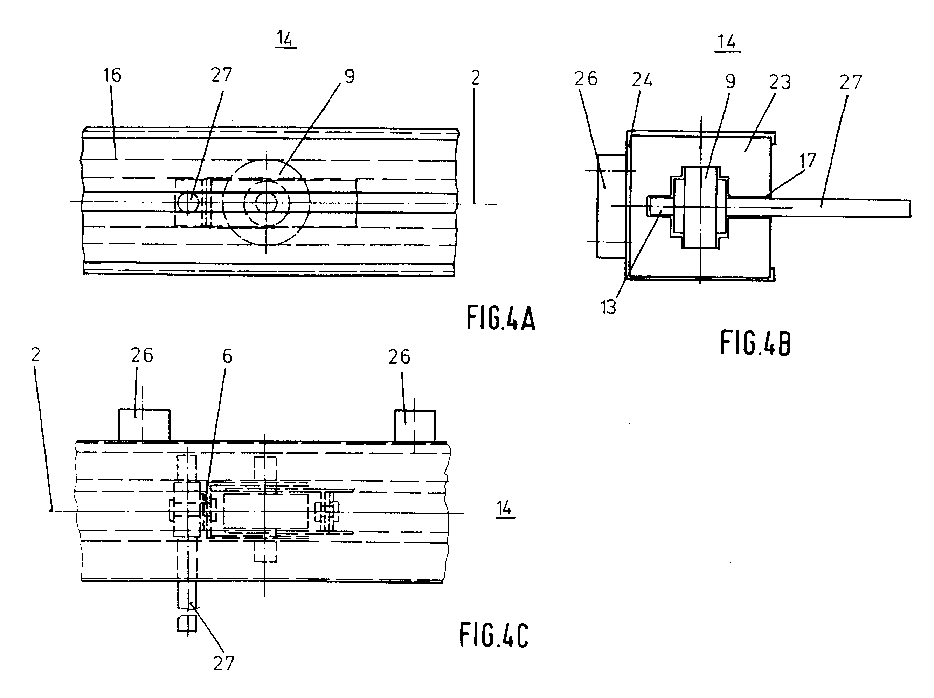

Gemäß Fig. 4 ist ebenfalls eine Gerade einer Kettenführung 14 dargestellt. Die Kettenführung 14 kann beispielsweise aus einem im Querschnitt C-förmigen Plastekörper 23 bestehen, der von einem Blechmantel 24 umgeben ist. Der Blechmantel 24 ist in erforderlichen Abständen mit Befestigungen 26 verbunden, die von der Druckmaschine gehalten werden. An der Spitze der Rollenkette 1 ist eine Papierbahnbefestigung vorgesehen, die am Gelenk 6 einen Bolzen 27 trägt, der durch die Öffnung 17 der Kettenführung 14 ragt und die Spitze der Papierbahn führt.

### Teileliste

- 1: Rollenkette
- 2: Kettenlängsachse
- 3: Lasche
- 4: Basisseite
- 5: -
- 6: Gelenk
- 7: Gabel
- 8: Bolzen
- 9: Rolle
- 10: -
- 11: Lochung
- 12: Anlaufscheibe
- 13: Verlängerung
- 14: Kettenführung
- 15: -
- 16: Laufbahn
- 17: Öffnung
- 18: Ausnehmung
- 19: Phase
- 20: -
- 21: Antriebsrad
- 22: Zahnflanke
- 23: Plastekörper
- 24: Blechmantel
- 25: -
- 26: Befestigung
- 27: Bolzen
- A: Kettenglied
- b: Abstand

## Patentansprüche

1. In einer Führung bewegbare Rollenkette (1) für eine Papiereinzugsvorrichtung einer Rollenrotationsdruckmaschine mit Kettengliedern (A), bestehend aus auf Bolzen (8) gelagerten Rollen (9), die von in Kettenlängsachse (2) parallelgeführten Laschenpaaren gehalten sind, wobei die Laschen (3) gabelförmig ausgebildet sind und an den Enden der Gabeln (7) quer zur Kettenlängsachse (2) gelenkig miteinander verbunden sind, dadurch gekennzeichnet, daß die Laschen an der Basisseite (4) der Gabel (7) in Richtung Kettenlängsachse (2) durch ein Drehgelenk (6) miteinander verbunden sind.

2. Rollenkette nach Anspruch 1, dadurch gekennzeichnet, daß die Laschen (3) an der Basisseite (4) der Gabeln (7) mittig in Richtung der Kettenlängsachse (2) Lochungen (11) zur Aufnahme des Gelenkes (6) aufweisen.

3. Rollenkette nach Anspruch 1 und 2, dadurch gekennzeichnet, daß das Gelenk (6) durch einen gestauchten Bolzen gebildet ist, der die Basisseiten (4) der Laschen (3) drehbar miteinander verbindet.

4. Rollenkette nach Anspruch 3, dadurch gekennzeichnet, daß das Gelenk (6) durch einen Niet gebildet ist, der die Basisseiten (4) der Laschen (3) drehbar miteinander verbindet.

5. Rollenkette nach Anspruch 1 bis 4, dadurch gekennzeichnet, daß das Gelenk (6) zur Verminderung der Reibung zwischen den beiden Basisseiten (4) eine Anlaufscheibe (12) aufweist.

6. Rollenkette nach Anspruch 1 bis 5, dadurch gekennzeichnet, daß die Enden der Gabeln (7) senkrecht zur Kettenlängsachse (2) Lochungen (11) aufweisen zur Aufnahme der Bolzen (8).

7. Rollenkette nach Anspruch 1 bis 6, dadurch gekennzeichnet, daß die Bolzen (8) beidseitig Verlängerungen (13) besitzen, die mit den Zahnflanken (22) eines Antriebsrades (21) in Eingriff stehen.

8. Rollenkette nach Anspruch 1 bis 7, dadurch gekennzeichnet, daß die Laufflächen der Rollen (9) an ihren Außenseiten Radien oder Phasen (19) aufweisen.

9. Rollenkette nach Anspruch 1 bis 8, dadurch gekennzeichnet, daß an der Spitze der Rollenkette (1) ein Bolzen (27) an einem Gelenk (6) vorgesehen ist, der die Papierbahn führt.

## Claims

1. Roller chain (1), which is movable in a guide, for a web threading device of a rotary web printing press with chain links (A) consisting of rollers (9) which are mounted on pins (8) and are held by pairs of tabs guided in parallel in the longitudinal axis (2) of the chain, the tabs (3) being fork-shaped in design and being articulated to one another transversely to the longitudinal axis (2) of the chain at the ends of the forks (7), characterised in that the tabs are connected to one another by a pivot joint (6) in the direction of the longitudinal axis (2) of the chain at the base (4) of the fork (7).

2. Roller chain according to Claim 1, characterised in that the tabs (3) have holes (11) for receiving the joint (6) centrally in the direction of the longitudinal axis (2) of the chain at the base (4) of the forks (7).

3. Roller chain according to Claims 1 and 2, characterised in that the joint (6) is formed by a compressed pin which connects the bases (4) of the tabs (3) rotatably to one another.

4. Roller chain according to Claim 3, characterised in that vhe joint (6) is formed by a rivet which connects the bases (4) of the tabs (3) rotatably to one another.

5. Roller chain according to Claims 1 to 4, characterised in that the joint (6) has a run-on disk (12) to reduce friction between the two bases (4).

6. Roller chain according to Claims 1 to 5, characterised in that the ends of the forks (7) have holes (11) perpendicularly to the longitudinal axis (2) of the chain for receiving the pins (8).

7. Roller chain according to Claims 1 to 6, characterised in that the pins (8) have, on both sides, extensions (13) which engage with the tooth flanks (22) of a driving wheel (21).

8. Roller chain according to Claims 1 to 7, characterised in that the running surfaces of the rollers (9) have radii or phases (19) on their exteriors.

9. Roller chain according to Claims 1 to 8, characterised in that, on the tip of the roller chain (1), a pin (27) is provided on a joint (6) to guide the web.

## Revendications

1. Chaîne à rouleaux (1) déplaçable dans un guidage, pour un dispositif d'enfilement de papier d'une machine à imprimer rotative avec des maillons (A), composés de rouleaux (9) montés à rotation sur des boulons (8), maintenus par des paires de pattes guidées en orientation parallèle et dans l'axe longitudinal de chaîne (2), les pattes (3) étant fourchues et reliées de façon articulée aux extrémités des fourches (7), transversalement par rapport à l'axe longitudinal (2) de la chaîne, caractérisé en ce que les pattes sont reliées ensemble sur la face de base (3) de la fourche (7), en direction de l'axe longitudinal (2), de la chaîne au moyen d'une articulation tournante (6).

2. Chaîne à rouleaux selon la revendication 1, caractérisée en ce que les pattes (3) présentent, sur le côté de base (4) des fourches (7), des perçages (11) réalisés centralement dans la direction de l'axe longitudinal (2) de la chaîne, pour recevoir l'articulation (6).

3. Chaîne à rouleaux selon la revendication 1 et 2, caractérisée en ce que l'articulation (6) est constituée par un boulon noyé, qui relie ensemble avec possibilité de rotation les côtés de base (4) des pattes (3).

4. Chaîne à rouleaux selon la revendication 3, caractérisée en ce que l'articulation (6) est constituée par un rivet qui relie ensemble en permettant une rotation les côtés de base (4) des pattes (3).

5. Chaîne à rouleaux selon les revendications 1 à 4, caractérisée en ce que l'articulation (6) présente une rondelle de garniture (12) pour diminuer le frottement entre les deux côtés de base (4).

6. Chaîne à rouleaux selon les revendications 1 à 5, caractérisée en ce que les extrémités des fourches (7) présentent des perçages (11) perpendiculaires par rapport à l'axe longitudinal (2) de la chaîne, pour recevoir les boulons (8).

7. Chaîne à rouleaux selon les revendications 1 à 6, caractérisée en ce que les boulons (8) comportent des deux cotés des prolongements (13) en contact avec les flancs (22) de denture d'une roue d'entraînement (21).

8. Chaîne à rouleaux selon les revendications 1 à 7 caractérisée en ce que les surfaces de roulement des rouleaux (8) présentent sur leurs faces extérieures des rayons ou des chanfreins (19).

9. Chaîne à rouleaux selon les revendications 1 à 8 caractérisé en ce que sur la pointe de la chaîne à rouleaux (1) est prévu un boulon (27) sur une articulation (6) assurant le guidage de la bande de papier.
